# EUROPEAN PATENT APPLICATION

(11) **EP 2 960 541 A1**
(43) Date of publication of application: **30.12.2015**
(21) Application number: 13875452.8
(22) Date of filing: 30.10.2013
(51) Int. Cl.: F16F 9/05, B61F 5/10, F16F 9/32, F16F 15/04

(54) **AIR SPRING**

(30) Priority: 22.02.2013 JP 2013033322
(71) Applicant: Toyo Tire & Rubber Co., Ltd., Osaka-shi, Osaka 550-8661 (JP)
(72) Inventor: YASUNAGA Yuki, Osaka-shi Osaka 550-8661 (JP)
(74) Representative: Fleuchaus, Michael A.
(86) International application number: PCT/JP2013/079407
(87) International publication number: WO 2014/129020

(57) **Abstract**

An air spring is provided, in which shifting movements of a lower bead and a lower bead receiver are markedly reduced or prevented so that the air spring can function favorably, even when large torsional stress is applied to the diaphragm of a railroad car or the like that uses bolsterless trucks. For this purpose, in the air spring that is formed to include an upper support 1, a lower support 2 arranged below the upper support 1, and a diaphragm 3 made of an elastic material and extending between the upper support 1 and the lower support 2, the lower support 2 has a lower bead receiver K that supports a lower bead 3b of the diaphragm 3, the lower bead receiver K being configured to include a bead receiver body 6 to which the lower bead 3b is fitted, and an elastic layer 9 made of an elastic material and interposed between the bead receiver body 6 and the lower support 2.

## Description

### TECHNICAL FIELD

The present invention relates to an air spring suitably used as a means of suspending a car such as a railroad car above trucks.

### BACKGROUND ART

An air spring of this type is known, such as the one disclosed in Patent Document 1, wherein the air spring includes an upper support, a lower support arranged below the upper support, and a diaphragm made of an elastic material and extending between the upper support and the lower support. In the air spring of Patent Document 1, an upper plate (1), a lower plate (2), and a tubular flexible membrane (3) correspond to the upper support, lower support, and diaphragm, respectively.

In railroad cars of the recent years, use of trucks configured without bolsters, i.e., bolsterless trucks, has become the mainstream, and air springs, namely diaphragms, are frequently subjected to torsional stress. A lower bead of the diaphragm, which is a part supported by the lower support, is smaller in diameter than an upper bead that is supported by the upper support, and therefore the lower bead is mainly strained by the torsional stress resulting from the twist in the diaphragm.

Accordingly, the lower bead receiver, which is a part of the lower support fitted with the lower bead, and the lower bead would shift from each other due to frequent application of torsional stress, which could shorten diaphragm lifetime because of the tendencies to wear and to leak the air. The lower bead could even be detached from the lower bead receiver if large torsional stress was applied.

There was another design, as disclosed in Patent Document 2, provided with lateral shift means (Y1) that support an annular interposed part (17) corresponding to the lower bead receiver that supports the lower bead (11) fitted thereto, such as to be slidable in horizontal direction relative to a second member (2S). By adopting this configuration, the torsional stress could be dispersed by the deformation of the diaphragm (3) and the movements of the lateral shift means (Y1) to minimize shifting movements of the lower bead and lower bead receiver.

### PRIOR ART DOCUMENTS

### PATENT DOCUMENTS

Patent Document 1: Japanese Patent Application Laid-open No. 5-196082
Patent Document 2: Japanese Patent Application Laid-open No. 2002-187548

### SUMMARY OF THE INVENTION

### PROBLEMS TO BE SOLVED BY THE INVENTION

While the lateral shift means of Patent Document 2 have exhibited the effect of reducing shifting movements of the lower bead and lower bead receiver to some extent, it has been pointed out that there still is some scope of improvement.

That is, the lateral shift means for allowing the annular interposed part (17) to slide radially within a range have a complex structure, which evidently caused an increase in the number of components and raised the cost, as well as required regular maintenance of sliding parts. There was also another possibility that the air may leak through several O rings (20) . There was thus the scope of further improvement due to many issues to be resolved to realize the mass-production of it.

An object of the present invention is to provide an air spring, in which shifting movements of a lower bead and a lower bead receiver are clearly reduced or prevented so that the air spring can function favorably, even when large torsional stress is applied to the diaphragm of a railroad car or the like that uses bolsterless trucks, by reviewing and making improvements to the support structure between the lower bead and the lower bead receiver.

### SOLUTIONS TO THE PROBLEMS

The invention as set forth in claim 1 is an air spring formed to include an upper support 1, a lower support 2 arranged below the upper support 1, and a diaphragm 3 made of an elastic material and extending between the upper support 1 and the lower support 2, characterized in that
the lower support 2 has a lower bead receiver K that supports a lower bead 3b of the diaphragm 3, the lower bead receiver K being configured to include a bead receiver body 6 to which the lower bead 3b is fitted, and an elastic layer 9 made of an elastic material and interposed between the bead receiver body 6 and the lower support 2.

The invention as set forth in claim 2 is the air spring as set forth in claim 1, characterized in that the bead receiver body 6 is formed as an annular member having a substantially L-shaped cross section, with a vertically oriented peripheral side wall 6A internally contacting the lower bead 3b, and a horizontally oriented peripheral bottom wall 6B on which the lower bead 3b is placed.

The invention as set forth in claim 3 is the air spring as set forth in claim 2, characterized in that the elastic layer 9 is formed as an annular member having an L-shaped cross section, with a vertical ring part 9A internally contacting the peripheral side wall 6A, and a horizontal ring part 9B contacting a lower surface 6b of the peripheral bottom wall 6B.

The invention as set forth in claim 4 is the air spring as set forth in claim 3, characterized in that the lower support 2 is configured to include an annular structure 8 having an L-shaped cross section, with a vertical tubular part 8A internally contacting the vertical ring part 9A, and a circular disc part 8B contacting a lower surface 9b of the horizontal ring part 9B.

The invention as set forth in claim 5 is the air spring as set forth in claim 1, characterized in that the elastic layer 9 is made of rubber.

The invention as set forth in claim 6 is the air spring as set forth in claim 1, characterized in that the air spring is designed for railroad cars, wherein the upper support 1 is supported on the car, while the lower support 2 is supported on a truck or a truck-side member.

### EFFECTS OF THE INVENTION

According to the invention as set forth in claim 1, when the diaphragm is undergoing torsional deformation, not only the diaphragm itself undergoes elastic deformation, but also the elastic layer of the lower bead receiver interposed between the lower bead of the diaphragm and the lower support deforms elastically. The stress resulting from the torsional deformation of the diaphragm is therefore dispersed by the elasticity of the diaphragm and of the lower bead receiver, so that the stress between the lower bead and the bead receiver body is reduced as compared to that in a conventional counterpart, and the shifting movements of the lower bead and lower bead receiver can be minimized, without the risk of reducing the operating life.

This is all achieved only by the lower bead receiver having the bead receiver body and the elastic layer, and therefore there is hardly any increase in the number of components, or in the complexity of the structure, so that it is favorable for mass-production.

Accordingly, an air spring that can clearly reduce or prevent shifting movements of a lower bead and a lower bead receiver to function favorably, even when large torsional stress is applied to the diaphragm of a railroad car or the like that uses bolsterless trucks, is provided.

It is advantageous if, as in the invention set forth in claim 2, the bead receiver body of the lower bead receiver is formed as an annular member having a substantially L-shaped cross section, with a vertically oriented peripheral side wall internally contacting the lower bead, and a horizontally oriented peripheral bottom wall on which the lower bead is placed, since the lower bead can then be firmly retained both on the underside and on the radially inner side.

It is advantageous if, as in the invention set forth in claim 3, the elastic layer is formed as an annular member having an L-shaped cross section, with a vertical ring part internally contacting the peripheral side wall, and a horizontal ring part contacting a lower surface of the peripheral bottom wall, since the bead receiver body can then be firmly retained both on the underside and on the radially inner side.

According to the invention set forth in claim 4, the lower support is configured to include an annular structure having an L-shaped cross section, with a vertical tubular part internally contacting the vertical ring part, and a circular disc part contacting a lower surface of the horizontal ring part. As compared to the lower support having an annular structure with an L-shaped cross section integrally formed with the lower support, the annular structure can be produced easily and the lower support is prevented from having a more complex shape. Dividing the part in two separate components is therefore advantageous in this regard, since the air spring can be provided in a more readily producible design.

An air spring excellent in function and producibility can be realized if the elastic layer is made of rubber, as in the invention set forth in claim 5, and an air spring suitable for railroad cars can be provided, as in the invention set forth in claim 6.

### BRIEF DESCRIPTION OF THE DRAWINGS

Fig. 1 is a cross-sectional view illustrating the structure of an air spring in Embodiment 1;
Fig. 2 is an enlarged cross-sectional view illustrating a lower bead receiver;
Fig. 3 is an operation diagram illustrating an example of a condition in which the air spring of Fig. 1 is twisted;
Fig. 4 is an enlarged cross-sectional view illustrating essential parts in the structure of a lower bead;
Fig. 5 is a graph showing the relationship between the stress and the displacement in a portion from the bead core to 3P;
Fig. 6 is a graph showing the relationship between the stress and the displacement in a portion from 3P to 4P;
Fig. 7 is a graph showing the relationship between the torsional angle and the displacement of the lower bead;
Fig. 8 is a cross-sectional view illustrating the structure of an air spring in Embodiment 2; and
Fig. 9 is a cross-sectional view illustrating a conventional air spring.

### EMBODIMENTS OF THE INVENTION

Hereinafter, embodiments of an air spring according to the present invention as those for railroad cars will be described as one example with reference to the drawings. "A truck-side member " as in "a truck or a truck-side member " herein should be understood to include a member directly supported on the truck such as a main shaft 4, or a member such as a lower support 2 indirectly supported on the truck via something (such as the main shaft 4 or elastic part 5).

### EMBODIMENT 1

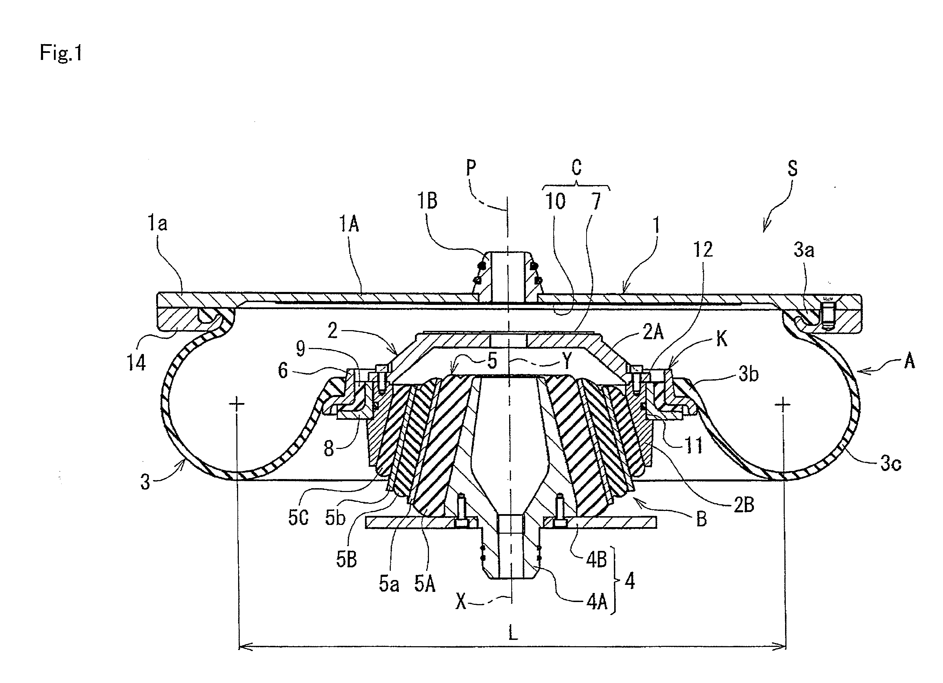

As shown in Fig. 1, the air spring A is incorporated as part of a suspension S for railroad cars. The suspension S is formed by the air spring A, an elastic mechanism B having a laminated rubber structure, and a slip stopper C. The main shaft 4 of the elastic mechanism B is supported on the truck (not shown), while an upper support 1 of the air spring A is supported on a railroad car (not shown).

Under normal conditions, the air spring A and elastic mechanism B provide suspension, while in an unusual situation wherein the air spring A falls into airless state such as by air leakage to be deflated, the slip stopper C exhibits a function of receiving and supporting the lowering upper support 1.

The air spring A is configured to include a generally disc-like upper support 1 that is secured to a body of a passenger car or the like to be supported (not shown) and has a vertically oriented axial center P, a lower support 2 (an example of a truck or a truck-side member) including a disc-like upper cover 2A and a tubular ring part 2B and having an axial center Y, and a diaphragm 3 made of rubber (an example of an elastic material), extending between these upper support 1 and lower support 2, and having a donut-like shape. The lower support 2 is provided with a lower bead receiver K that is interposed between the ring part 2B and the diaphragm 3 to function as part of a damping mechanism.

The upper support 1 includes a disc-like upper body 1A and a tubular, circular frustum boss 1B integral with the upper body and protruding upwards from the center thereof, and is configured as a member that is circular in plan view with the axial center P. A flat upper slip plate 10 is provided on the lower surface of the upper body 1A, and a mounting ring 14 having a generally hook-like cross section is fastened with bolts to the underside of a peripheral attachment part 1a in the outer rim of the upper body 1A.

The lower support 2 is formed by the ring part 2B, upper cover 2A, and lower bead receiver K fitted onto the ring part 2B, and supported on the truck (not shown) via the elastic mechanism B in an orientation in which its axial center Y is vertical. The ring part 2B is a vertically oriented tube made of a hard material such as metal having an inclined inner circumferential surface 2b inclined such that the diameter increases downwards. The upper cover 2A is made of a hard material such as metal in the form of an upside down bowl, and fastened to the upper side of the ring part 2B with bolts to be integral therewith.

A flat lower slip plate 7 is provided on the upper surface of the upper cover 2A to be integral therewith. The upper cover 2A and ring part 2B are integrally coupled together with bolts by a mutually engaging spigot joint step structure, so that they have a common axial center Y.

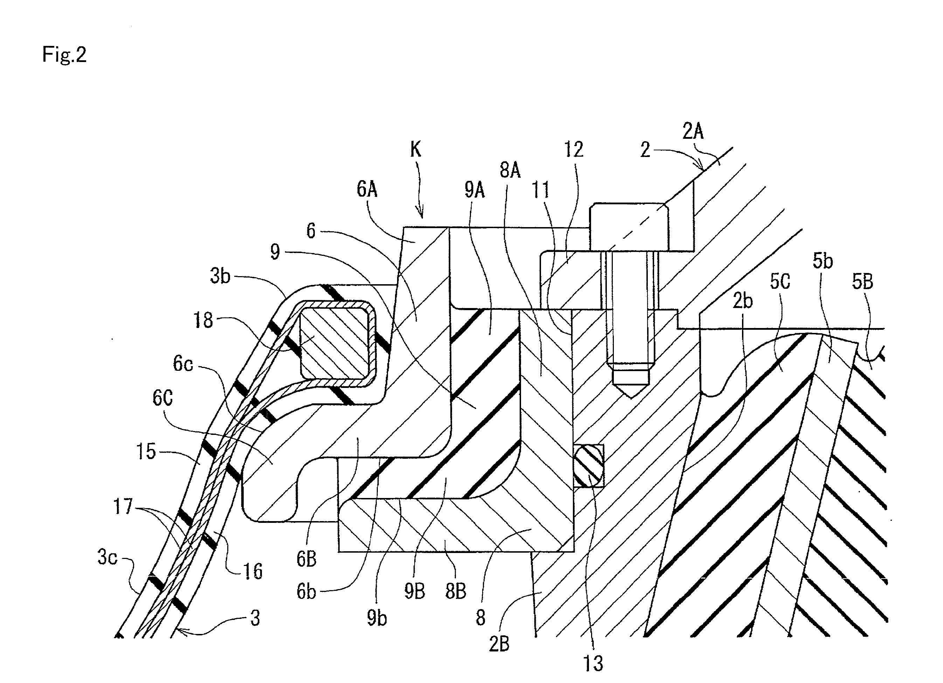

The diaphragm 3 having an effective diameter L is an elastic membrane, also called bellows, which includes an upper bead 3a that is an upper, large-diameter-side peripheral end, a lower bead 3b that is a lower, small-diameter-side peripheral end, and a main body 3c. The diaphragm 3, or an elastic membrane, is configured as a multilayer structure, as shown in Fig. 2, with an outer rubber layer (elastic material layer) 15, an inner rubber layer (elastic material layer) 16, and two, inner and outer, layers of reinforcing cords 17 between the outer rubber layer 15 and the inner rubber layer 16. The lower bead 3b includes an annular, high-strength core element 18 surrounded by the reinforcing cord layers 17.

The upper support 1 and the diaphragm 3 are united, with the outer peripheral attachment part 1a and mounting ring 14 sandwiching and retaining the upper bead 3a in an airtight manner. The diaphragm 3 and the lower support 2 are united in an airtight manner, with the lower bead 3b being fitted onto a bead receiver body 6, which is an outer annular member of the lower bead receiver K.

Thus the internal space of the diaphragm 3 is sealed from the outside in an airtight manner, so that it provides a damping effect (air cushion) by compression of the air. It is possible to adopt a configuration for letting in and out the air through a hole (no reference numeral given) in the main shaft 4 of the elastic mechanism B or a hole (no reference numeral given) in the boss 1B to adjust the intensity of the damping effect of the air spring A.

The elastic mechanism B is configured to include, as shown in Fig. 1, the main shaft 4 that is formed by a tubular core shaft 4A and an annular disc 4B and has a vertically oriented axial center X, and an elastic part 5 formed between the ring part 2B and the main shaft in an orientation wherein its axis coincides, (or substantially coincides) with the axial center X. The main shaft 4 is supported on the truck (not shown).

The elastic part 5 is formed as a laminated rubber structure having a trapezoidal shape in a cross section cut along the axial center X, with a plurality of elastic layers 5A to 5C and hard material partitions 5a and 5b alternately laminated in the radial direction coaxially (or substantially coaxially) with the axial center X. Such a suspension S wherein the elastic mechanism B having a trapezoidal cross section and the air spring A are arranged up and down in series is also called a "conical stopper-type air spring".

The slip stopper C is formed by the upper slip plate 10 provided to the upper support 1 and the lower slip late 7 provided to the upper cover 2A, as shown in Fig. 1. Though it is preferable that one of the upper slip plate 10 and the lower slip plate 7 is made of a low-friction material while the other is made of stainless steel, for example, it is not limited thereto.

Next, the lower bead receiver K will be described. The lower bead receiver K is configured to include, as shown in Fig. 1 and Fig. 2, the bead receiver body 6 to which the lower bead 3b is fitted as mentioned above, an inner flange 8 that has an annular structure and is fitted onto the ring part 2B, and an annular elastic layer 9 interposed between the bead receiver body 6 and the inner flange 8.

The bead receiver body 6 made of a metal material or the like is formed as a circular, annular member having a substantially L-shaped cross section, with a vertically oriented peripheral side wall 6A internally contacting the lower bead 3b, a horizontally oriented peripheral bottom wall 6B on which the lower bead 3b is placed, and a curved guide wall 6C that contacts and guides the main body 3c near the lower bead 3b. The curved guide wall 6C has an outer circumferential surface 6c in a circular arc of substantially 90°.

The elastic layer 9 made of rubber or the like is formed as a circular, annular member having an L-shaped cross section, with a vertical ring part 9A internally contacting the peripheral side wall 6A, and a horizontal ring part 9B contacting a lower surface 6b of the peripheral bottom wall 6B.

The inner flange 8 made of a metal material or the like is formed as an annular structure having an L-shaped cross section, with a vertical tubular part 8A internally contacting the vertical ring part 9A, and a circular disc part 8B contacting a lower surface 9b of the horizontal ring part 9B.

The inner flange 8 is retained so that it does not come off upwards by being fitted down into a vertically oriented spigot recess 11 which is a step formed at the upper end in the rim of the ring part 2B finished with high precision, and by an outer peripheral part 12 of the upper cover 2A fastened to the ring part 2B with bolts. An O-ring 13 is fitted in the vertically oriented spigot recess 11 to provide an airtight seal.

While the elastic layer 9 is supported on the ring part 2B via the inner flange 8 in Embodiment 1, it is possible to adopt a configuration in which the elastic layer is supported on a ring part 2B that has a structural element corresponding to the inner flange 8 integrally formed therewith.

If used in bolsterless trucks that are increasingly used in recent years, the air spring A in the suspension S for railroad cars structurally undergoes large torsional deformation mainly in the front to back direction. Namely, solely the diaphragm 3 of the air spring A is subjected to the torsion caused by a relative angular difference between upper and lower axial centers of the vehicle body (car) and the truck when the car runs in a curve, as well as the torsion caused by eccentricity due to the centrifugal force. Therefore, the diaphragm 3 is desired to have the flexibility and durability to withstand frequent torsional displacements, and the upper and lower beads 3a and 3b, and in particular the engaging parts of the lower bead 3b that has a smaller diameter and thus is subjected to larger stress, and the lower support 2, are desired to be hardly disengageable and highly friction resistant.

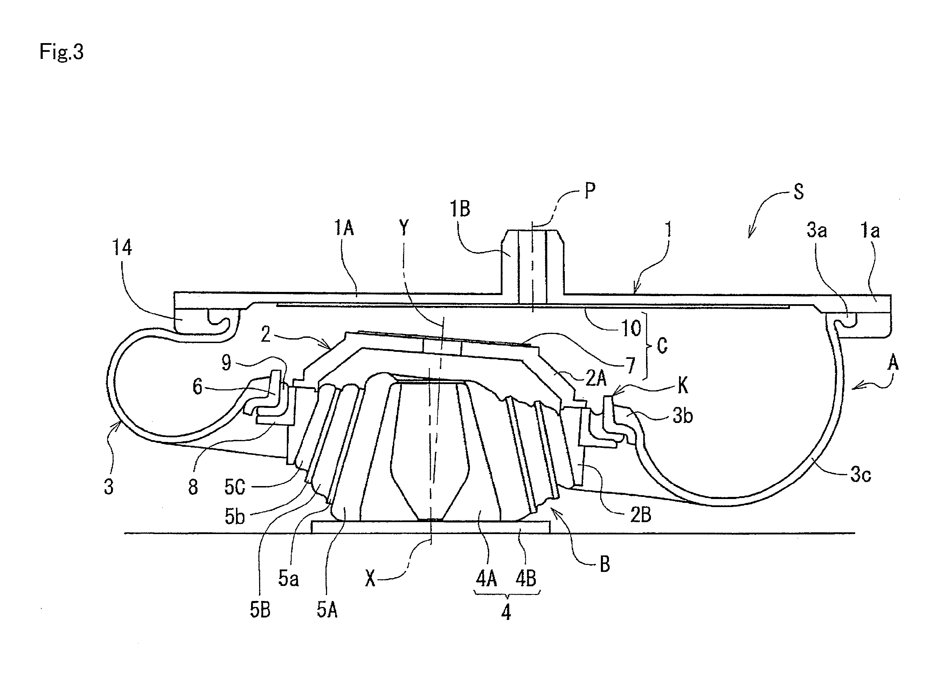

Fig. 3 shows an example of how much the diaphragm 3 may be twisted such as when the car runs in a curve. As shown in Fig. 3, as compared to the normal condition shown in Fig. 1 (with no torsion and the three axial centers P, Y, and X aligned to be collinear), the axial center P of the upper support 1, the axial center Y of the lower support 2, and the axial center X of the main shaft 4 are all shifted sideways relative to each other, as well as the axial center Y of the lower support 2 is markedly tilted. In particular, it can be clearly seen that the axial center P of the upper support 1 is largely shifted sideways (eccentric) to the axial center Y of the lower support 2 and the axial center X of the main shaft 4. Note, in Fig. 3, the general contour of the air spring A is shown and the hatching in various parts is intentionally omitted to facilitate understanding of the torsional deformation.

The diaphragm 3 is undergoing torsional deformation in which the right side part on the paper plane of Fig. 3 is pulled sideways, while the left side part on the paper plane of Fig. 3 is compressed sideways. It is also understood that the elastic layer 9 in the lower bead receiver (damping mechanism) K is deformed by tension in the right side part on the paper plane of Fig. 3 and is deformed by compression in the left side part on the paper plane of Fig. 3. The elastic layers 5A to 5C in the elastic mechanism B, too, though to a lesser extent, are undergoing similar deformation as with the elastic layer 9, and the lower support 2 is inclined relative to the main shaft 4 apparently because of the presence of the elastic mechanism B configured to have a trapezoidal cross section.

Unlike the conventional means whereby the lower bead 3b is directly fitted with the lower support 2, the air spring A of the present invention is characterized in that the lower bead receiver K that has the bead receiver body 6 made of a hard material and the elastic layer 9 made of an elastic material is interposed between the lower bead 3b and the lower support 2. Namely, the elastic deformation of the elastic layer 9 in the lower bead receiver K significantly alleviates the stress applied to the lower bead 3b caused by the torsional deformation of the diaphragm.

This reduces the friction between the diaphragm 3 and the bead receiver body 6 (more specifically, the peripheral bottom wall 6B and the curved guide wall 6C), which would take place between the diaphragm and the lower support in the conventional counterpart, as well as eliminates the risk of unwanted consequences such as defective airtightness and tendency to detach because of the lower bead 3b being largely displaced so as to be torn off from the peripheral side wall 6A in a direction in which it comes out of the bead receiver body 6.

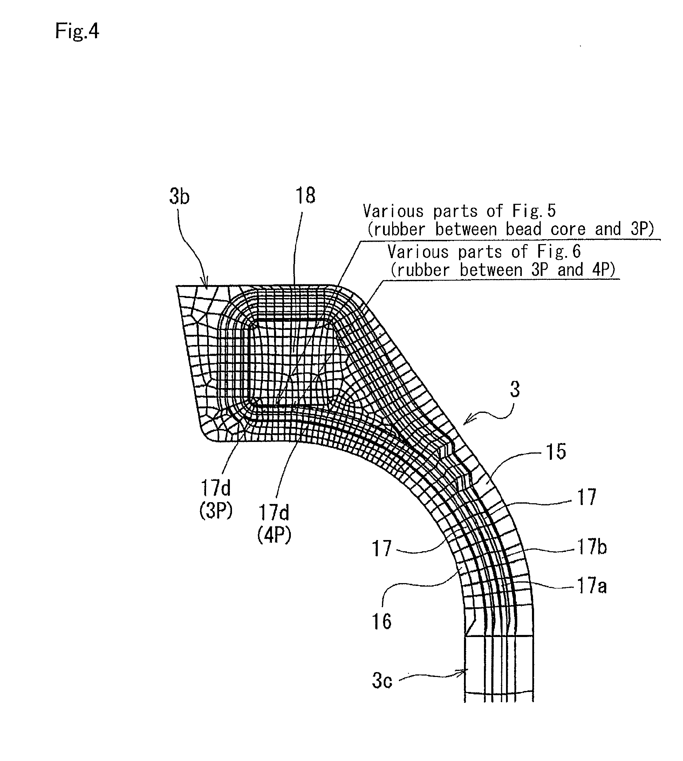

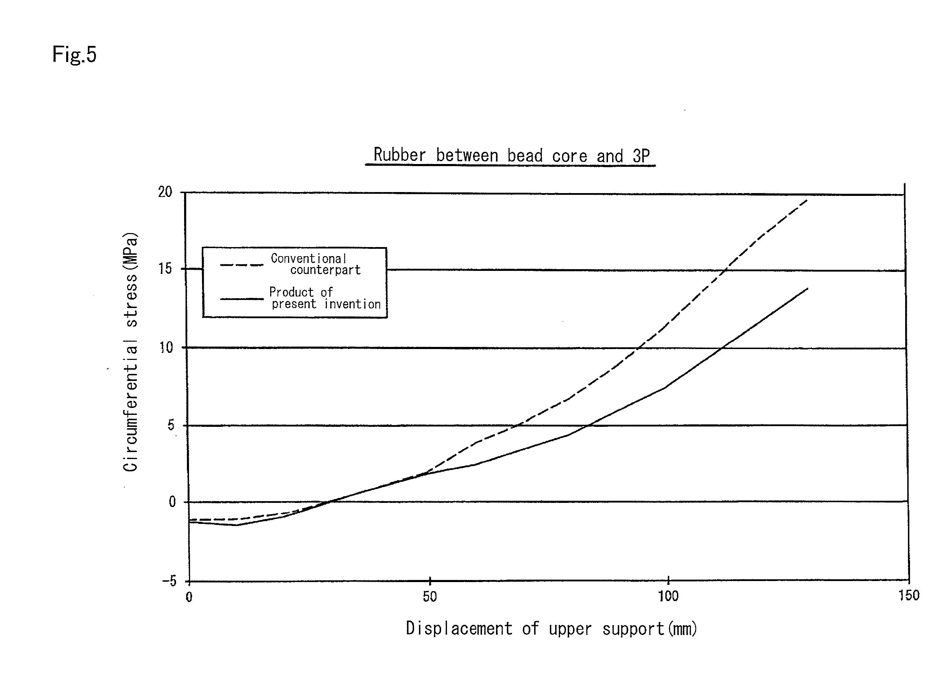

Fig. 4 is an example of a diagram showing lines of stress in the lower bead 3b and its vicinity of the diaphragm 3 of the air spring A according to Embodiment 1. In this example, the outer reinforcing cord layer 17 is formed by two, inner and outer, laminated layers of cords 17a and 17b, and the inner reinforcing cord layer 17 is also formed by two, inner and outer, laminated layers of cords 17c and 17d. In Fig. 5 to Fig. 7 to be described later, the core element 18, the inner cord 17d of the inner reinforcing cord layer 17, and the outer cord 17c of the inner reinforcing cord layer 17, are referred to as "bead core", "3P", and "4P", respectively.

Fig. 5 to Fig. 7 are graphs showing the relationship between the displacement of the upper support 1 relative to the lower support 2 and the stress applied to various parts or portions of the lower bead 3b in the state in which the diaphragm 3 is undergoing torsional deformation as shown in Fig. 3. Fig. 5 shows the stress applied to the part between the core element (bead core) 18 and inner cord 17d (3P). The title "rubber between bead core and 3P" given to Fig. 5 refers to the stress applied to the rubber present between the core element 18 and the inner cord 17d.

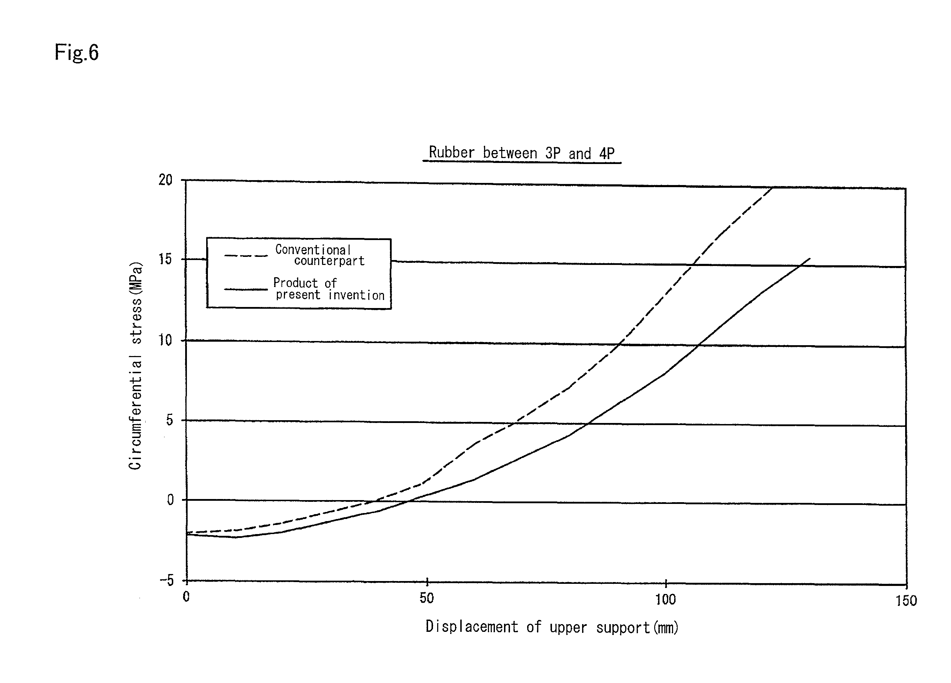

Fig. 6 shows the stress applied to the part between the inner cord 17d (3P) and the outer cord 17c (4P) of the inner reinforcing cord layer 17. The title "rubber between 3P and 4P" given to Fig. 5 refers to the stress applied to the rubber present between the inner and outer cords 17d and 17c.

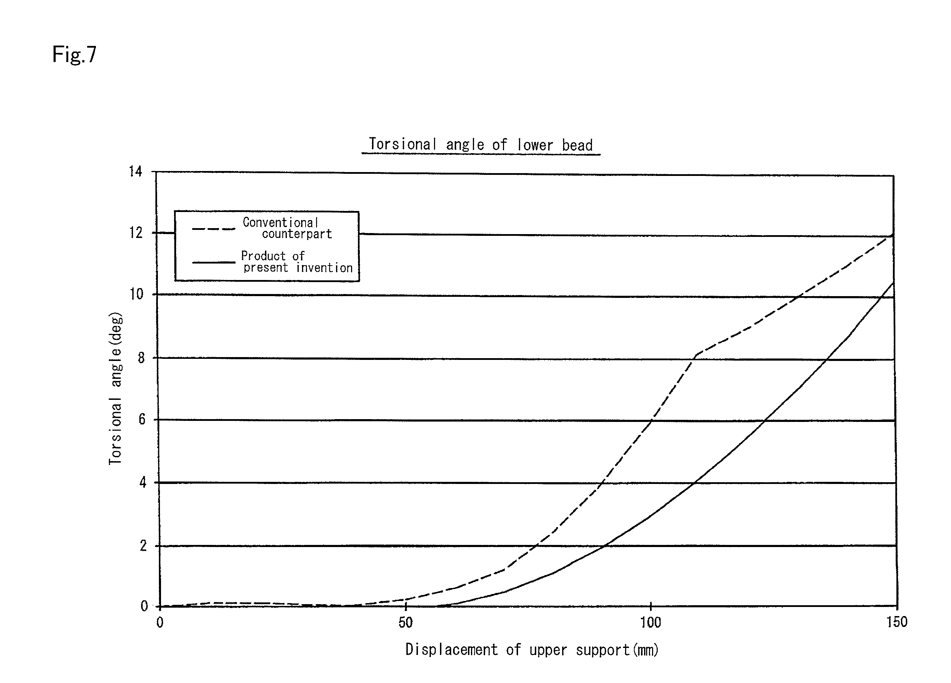

Fig. 7 shows the torsional angle of a portion most largely twisted in the lower bead 3b. That is a portion in the middle between the most pulled portion (right side part on the paper plane of Fig. 3) and the most compressed portion (left side part on the paper plane of Fig. 3) of the diaphragm 3. The angle of this most twisted portion twisted from its normal position relative to the upper support 1 is indicated as "torsional angle".

Parts in Fig. 5 and Fig. 6, and referred to in the description of Fig. 5 and Fig. 6 are present in the portions of the diaphragm 3 defined in the description of Fig. 7, and more particularly between the core element 18 and the peripheral bottom wall 6B (see Fig. 2) of the lower bead 3b.

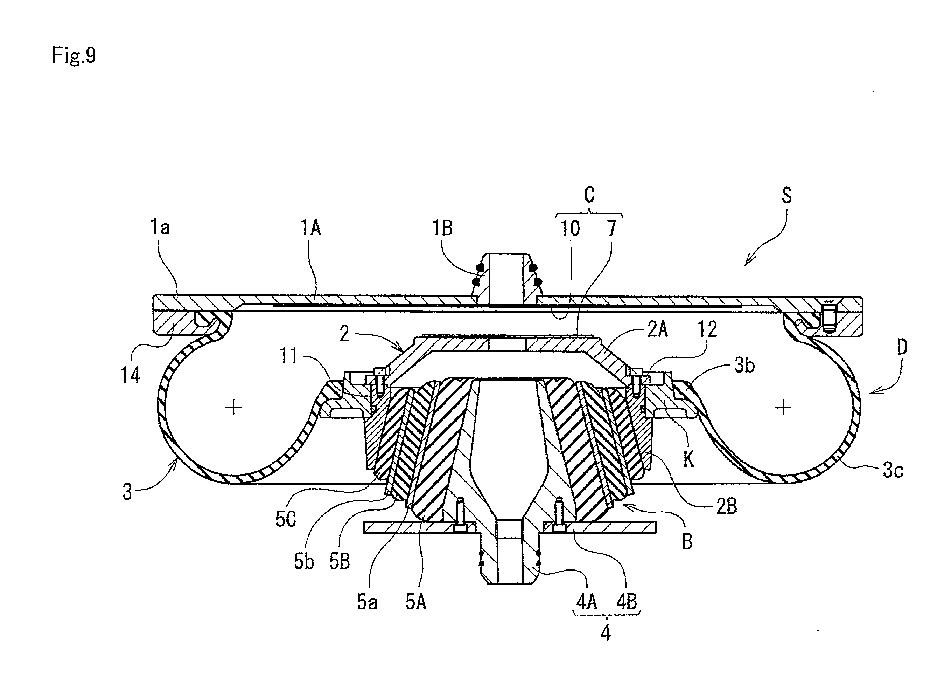

In Fig. 5 to Fig. 7, values regarding the air spring A of the present invention are plotted with a solid line, while values regarding an air spring D having a conventional structure are plotted with a broken line. Data regarding the conventional structure here is of the air spring D shown in Fig. 9, in which the lower bead receiver K in Fig. 1 is formed of a single metal component and the diaphragm 3 is rigidly fitted to the lower support 2. Parts corresponding to those of Fig. 1 are given the same reference numerals in Fig. 9.

As is understood from Fig. 5 to Fig. 7, all the data show that the stress is reduced in a product according to the present invention compared to a conventional counterpart, which is a clear indication of the effects of the lower bead receiver (damping mechanism) K. It can be safely assumed that the torsional angle is correlated in the sense that the larger the angle, the more the stress is reduced.

### EMBODIMENT 2

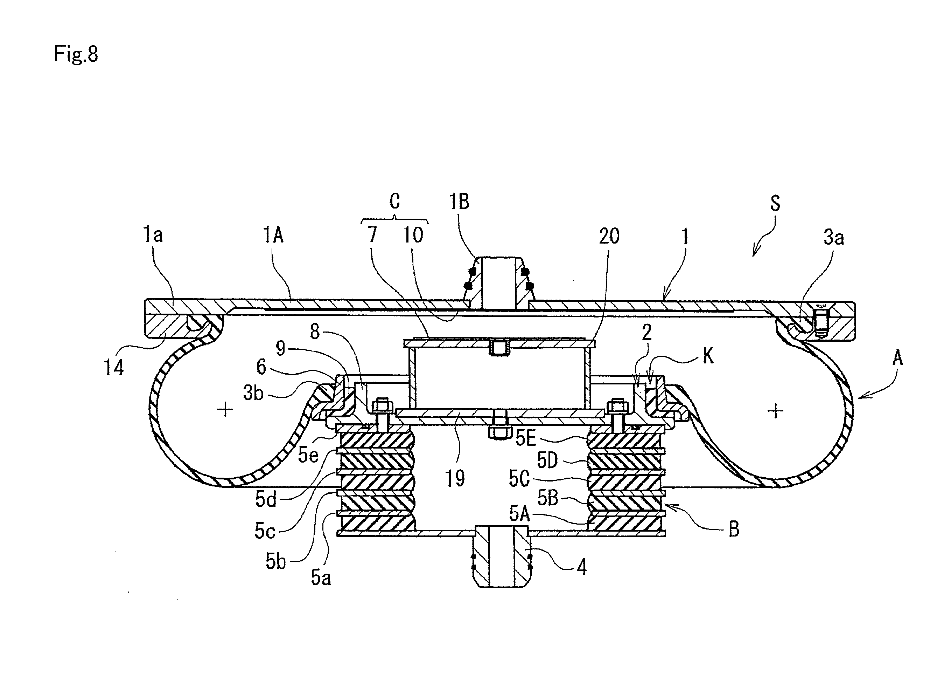

The suspension S may be the one shown in Fig. 8. That is, the suspension S according to Embodiment 2 shown in Fig. 8 has an elastic mechanism B and a lower support 2 that are different from those of Fig. 1. The lower bead receiver K is substantially the same. Namely, the inner flange 8 in Embodiment 1 is omitted, and instead, the elastic layer 9 is directly supported by part of the lower support 2.

In this case, the elastic mechanism B is formed as an elastic part 5 having a laminated rubber structure, wherein five elastic layers 5A to 5E and five hard material partitions 5a to 5e are alternately stacked upon one another.

The lower support 2 is formed of a single member having an annular structure 8 integral therewith, and has a frame 20 thereabove for supporting the lower slip plate 7 via a reinforcing plate 19.

### OTHER EMBODIMENTS

The lower bead receiver K may have a multilayer structure, wherein two or more pairs of hard material bead receiver bodies 6 and elastic layers 9 of an elastic material are stacked upon one another. The bead receiver body 6 and elastic layer 9 may have a cross section other than the L shape, such as arcuate, or in the form of letter I, or substantially in the form of letter Z.

### DESCRIPTION OF REFERENCE SIGNS

- 1:: Upper support
- 2:: Lower support
- 3:: Diaphragm
- 3b:: Lower bead
- 6:: Bead receiver body
- 6A:: Peripheral side wall
- 6B:: Peripheral bottom wall
- 8:: Annular structure
- 8A:: Vertical tubular part
- 8B:: Circular disc part
- 9:: Elastic layer
- 9A:: Vertical ring part
- 9B:: Horizontal ring part
- K:: Lower bead receiver

## Claims

1. An air spring formed to include an upper support, a lower support arranged below said upper support, and a diaphragm made of an elastic material and extending between said upper support and said lower support, wherein
said lower support has a lower bead receiver that supports a lower bead of said diaphragm, said lower bead receiver being configured to include a bead receiver body to which said lower bead is fitted, and an elastic layer made of an elastic material and interposed between said bead receiver body and said lower support.

2. The air spring according to claim 1, wherein said bead receiver body is formed as an annular member having a substantially L-shaped cross section, with a vertically oriented peripheral side wall internally contacting said lower bead, and a horizontally oriented peripheral bottom wall on which said lower bead is placed.

3. The air spring according to claim 2, wherein said elastic layer is formed as an annular member having an L-shaped cross section, with a vertical ring part internally contacting said peripheral side wall, and a horizontal ring part contacting a lower surface of said peripheral bottom wall.

4. The air spring according to claim 3, wherein said lower support is configured to include an annular structure having an L-shaped cross section, with a vertical tubular part internally contacting said vertical ring part, and a circular disc part contacting a lower surface of said horizontal ring part.

5. The air spring according to claim 1, wherein said elastic layer is made of rubber.

6. The air spring according to claim 1, designed for railroad cars, wherein said upper support is supported on a car, while said lower support is supported on a truck or a truck-side member.
